# EUROPEAN PATENT SPECIFICATION

(11) **EP 1 554 701 B1**
(45) Date of publication and mention of the grant of the patent: **30.07.2008**
(21) Application number: 03759778.8
(22) Date of filing: 22.09.2003
(51) Int. Cl.: G07F 19/00

(54) **TRANSACTION PROCESSING SYSTEM**
SYSTEM ZUR TRANSAKTIONSVERARBEITUNG
SYSTEME DE TRAITEMENT DE TRANSACTION

(30) Priority: 23.10.2002 ZA 200208588; 09.07.2003 ZA 200305298
(43) Date of publication of application: 20.07.2005
(73) Proprietor: MS2 Online (SA)(PTY) Ltd, 0028 Pretoria (ZA)
(72) Inventor: BLOEM, Nicolaas Cornelis, Waterkloof, 0181 Pretoria (ZA); HANEKOM, Eric Henry, Stellenbosch, 7600 Cape Town (ZA); MARAIS, Matthys Johannes DM, Centurion, 0149 Pretoria (ZA); SCHOEMAN, Andre, Waterkloof Ridge, 0181 Pretoria (ZA); SMIT, Andries Burger, Durbanville, 7550 Cape Town (ZA); SMITH, Eugene Francois, Durbanville, 7550 Cape Town (ZA)
(74) Representative: Niederkofler, Oswald
(86) International application number: PCT/ZA2003/000137
(87) International publication number: WO 2004/038667

(56) References cited:
- WO-A-01/63375
- WO-A-02/37397
- US-A1- 2002 069 178
- US-B1- 6 317 745

## Description

### FIELD OF THE INVENTION

THIS INVENTION relates, in general, to a processing system and, in particular but not exclusively, to a method of processing a transaction and to a transaction processing system.

An alternative transaction processing system is disclosed in the document WO 01/63375 which teaches a system and a method of financial transactions using mobile phones comprising a point of sale terminal (POS) located at a merchant place and a cellular service center (CSC) remotely located, for administrating the transactions. The CSC communicates with the mobile telephone of the customers and with the POS.

### SUMMARY OF THE INVENTION

In the specification and claims which follow the term "transaction information" excludes confidential information such as bank account details, credit card details, debit card details, or any other details which can be used to withdraw money from a bank account or the like, and the term "confidential information" includes bank account details, credit card details, debit card details, or any other details which can be used to withdraw money from a bank account or the like.

According to a first aspect of the invention, there is provided a method of processing a transaction which method includes the following steps, in any order:
receiving a data message request which originates from a telecommunications data message sent by a requester requesting a monetary transfer to a recipient, wherein the telecommunications data message is sent from a telecommunication device of the requester via a telecommunications network without being relayed through the recipient, in which said data message request contains transaction information capable of uniquely identifying, on at least one host database, the requester;
accessing electronically the at least one host data base to which confidential information of a plurality of requesters have been entrusted;
obtaining verification that a monetary transfer between the requester and a recipient of the monetary transfer will be or has been carried out in relation to the transaction; and
transmitting an electronic transaction verification message confirming that a monetary transfer between the requester and the recipient will be or has been carried out.

Thus, less sensitive transaction information is contained in the data message request while the more sensitive confidential information is stored on the host database. The confidential information is thus not transmitted or received over the telecommunications network by the requester, a provider of goods or services, or a mere beneficiary of the monetary transfer.

The method may include, prior to the step of receiving a data message request, the step of storing, on at least one host data base, confidential information of a plurality of requesters.

The at least one host data base may include banking information of a plurality of recipients. The banking information may include confidential information. Accordingly, the method may include, prior to the step of receiving a data message request, the step of storing, on at least one host data base, banking information of a plurality of recipients.

The method may include, prior to the step of obtaining verification, the step of matching the requester and the recipient from the data message request.

The telecommunications device may be a mobile communications device such as a mobile telephone handset, a mobile computer (e.g. a laptop computer), a personal digital assistant (PDA), or the like. The mobile communications device may be adapted to operate in a mobile communications network, a satellite transceiver, or the like. Accordingly, the data message may include a short message service (SMS) data message, a wireless application protocol (WAP) data message, an e-mail data message, or the like.

The telecommunications device may be a non-mobile communications device such as a non-mobile computer, a non-mobile telephone handset, a PDA, or the like. Accordingly, the data message request may include an e-mail data message, a SMS data message (typically originating from a non-mobile telephone), or the like.

The step of receiving a data message request may include receiving the data message request from a gateway configured to relay the telecommunications data message.

The data message request may include the information contained in the telecommunications data message and information identifying the requester by identifying where the telecommunications data message originates from, for example, a telephone number when the telecommunications device is a telephone, or an e-mail address of the sender when the data message request originates from an e-mail data message. The information identifying the requester by identifying where the telecommunications data message originates from is typically added to the telecommunications data message by the telecommunications network and/or the gateway. Accordingly, the step of receiving a data message request may include receiving a compound data message which contains multiple mobile originating data messages manipulated by the gateway into a format enabling the host database to identify the requester in each of the mobile originating data messages. Therefore, it is to be appreciated that, in one embodiment of the invention, the telecommunications data message may not include any information identifying the requester as the only information necessary is the information identifying the recipient.

Mobile originating data messages may originate from localized communication networks, such as cellular telephone networks. However, data messages received via the gateway may also originate from localised communication networks remote from where the gateway is located, such as a cellular telephone network located in another country.

The telecommunications data message may contain information uniquely identifying the requester, such as a requester code and/or requester security code, which is matched to information on the at least one host database thereby to retrieve the confidential information of a requester.

The telecommunications data message may contain information uniquely identifying the recipient, such as a recipient code and/or recipient security code, which is matched to information on the at least one host database thereby to retrieve the banking information of a recipient.

The method may also include, prior to the step of receiving a data message request, the step of designating, on the at least one host database, a particular recipient for each transaction related to a particular data message request such that the telecommunications data message does not require any information specifically identifying the recipient as the recipient can be obtained from the host database.

The telecommunications data message may contain transaction information regarding the amount of the monetary transfer of the transaction.

The telecommunications data message may contain transaction information regarding a specific account of the requester from which the money is to be obtained. This will typically be the case where the requester has account details for a plurality of accounts stored on the host database. In this case, the information regarding the specific account of the recipient may include a predetermined code related to an account.

The telecommunications data message may contain transaction information regarding a specific account of the recipient to which the money is to be transferred. It is to be appreciated that the transaction information regarding a specific account of the recipient should preferably not include confidential information, such as credit card details, or the like. This will typically be the case where the recipient's account details are not stored on the host database or where the recipient has account details for a plurality of accounts stored on the host database. In the case where the recipient has account details for a plurality of accounts stored on the host database, the information regarding the specific account of the recipient may include a predetermined code related to an account.

The telecommunications data message may contain transaction information uniquely identifying details of goods or services, typically to be provided to the requester or a third party nominated by the requester. The telecommunications data message may contain transaction information uniquely identifying a third party nominated by the requester to which the goods or services are to be provided. The details of the goods or services to be provided may be associated with specific goods or services, or may be selected from a selection of goods or services of the provider.

The recipient may include a provider of goods or services such that the step of transmitting an electronic transaction verification message facilitates the provision of goods or services to the requester. Otherwise, the recipient may include a mere beneficiary of the monetary transfer.

The step of obtaining verification may include the steps of
transmitting an electronic message enabling monetary transfer between the requester and the recipient to be carried out in relation to the transaction; and
receiving verification of the monetary transfer.

The step of transmitting an electronic message enabling monetary transfer between the requester and the recipient may be transmitted to a banking institution which would in turn provide the verification of the monetary transfer.

The method may also include, prior to the step of receiving a data message request, the step of receiving money from the requester for subsequent payment to a recipient. The step of obtaining verification may then include verifying that there is sufficient money remaining of the money received from the requester to effect the monetary transfer requested.

Accordingly, it is to be appreciated that the monetary transfer may include a direct bank transfer, a transfer of pre-paid credits, or any other transfer of monetary value.

The step of transmitting an electronic transaction verification message may be transmitted to the requester and/or to the recipient as a telecommunications data message as described above with respect to the received data message request. If transmitted to the requester, the verification message may be transmitted to the same telecommunications device which sent the data message request. If transmitted to the recipient, the verification message may be transmitted to a telecommunications device of the recipient, the contact details of which are stored on the host database. If transmitted to the requester, the verification message may include a unique code that the requester may present to the recipient confirming verification of the monetary transfer. The unique code may be associated with a specific good, for example, the unique code may be a product code referring to a specific product of the provider, or the unique code may be an order number referring to a specific order placed at the provider of goods.

The services may include an amount of a resource allocated to the requester, for example, an amount of airtime access to a cellular telephone network. The unique code may be associated with the amount of resource allocated.

The method may further include allocating said resources from the provider to the requester on presentation of the unique code by the requester.

The confidential information stored on the database for the requester may include, in addition to banking details or the like, the delivery address of the requester, personal details of the requester, contact details of the requester, and/or the like.

The confidential information stored on the database for the recipient may include, in addition to banking details or the like, personal details of the recipient, contact details of the recipient, and/or the like.

The method may include, prior to the step of obtaining verification, the step of sending a confirmation message to a registered telecommunications device of a registered requester corresponding to the requester uniquely identified by the transaction information, in which confirmation message confirmation of the monetary transfer is requested. In this way, fraudulent data message requests can be spotted in circumstances where the data message request does not originate from the same telecommunications device as the registered telecommunications device to which the confirmation message is sent.

The sent confirmation message may include a code which is to be returned in order to confirm that the monetary transfer is to be requested. Such code is typically randomly generated. The sent confirmation message may include details of the monetary transfer such as details of the requester, details of the recipient, details of the amount, details of the goods or services, and/or the like. The method may then include the step of waiting for the receipt of a confirmation message confirming that the monetary transfer is to be requested before proceeding with the method.

According to a second aspect of the invention, there is provided a transaction processing system which is configured to facilitate the method described above. Accordingly, the system typically includes:
a first network interface connectable to a telecommunication network, the first network interface being configured to receive a data message request originating from a telecommunications data message sent by a requester requesting a monetary transfer to a recipient, wherein the telecommunications data message is sent from a telecommunication device of the requester via a telecommunications network without being relayed through the recipient, wherein the data message request contains transaction information uniquely identifying the requester, and the first network interface is configured to transmit a data message;
a host database containing confidential information of requesters wherein the confidential information of each requester is indexed with at least some of the information contained in a data message request; and
a processor operable to receive the data message request via the first network interface; to retrieve confidential information of the requester by use of the uniquely identifiable requester information; to obtain verification that a monetary transfer between the requester and a recipient of the monetary transfer will be or has been carried out in relation to the transaction; and to transmit a confirmation of transaction message to the provider via the first network interface.

The first network interface may include a telephone modem, an ISDN modem, or the like.

The system may include a second network interface connectable to a secure data network, the second network interface configured to transmit monetary transfer requests and to receive monetary transfer verifications. Accordingly, the processor may be operable to transmit a monetary transfer request containing confidential information of the requester and banking information of the recipient, via the second network interface; to initiate a transfer of monetary value from the requester to the recipient; and, in response to the monetary transfer request, to receive a monetary transfer confirmation via the second network interface.

The second network interface may include a dedicated secure wide area network (WAN), for example a direct link or switch to a banking or financial institution.

The host database may contain banking information of at least one recipient. The banking information may include confidential information.

At least one recipient may be a provider of goods or services. The host database may include an inventory of goods or services for each provider. The data message request may contain details of requested goods or services.

The host database and/or the processor may be configured to automatically facilitate any or all of the steps of the method described above that are of a nature that can be facilitated automatically.

### BRIEF DESCRIPTION OF THE DRAWINGS

The invention will now be described, by way of non-limiting example only, with reference to the following diagrammatic drawings in which
Figure 1 shows a schematic block diagram of a transaction processing system in accordance with the invention;
Figure 2 shows a flow diagram of a method of processing a transaction in the transaction processing system of Figure 1; and
Figure 3 shows the format of a SMS telecommunications data message sent by a requester.

### DETAILED DESCRIPTION OF THE DRAWINGS

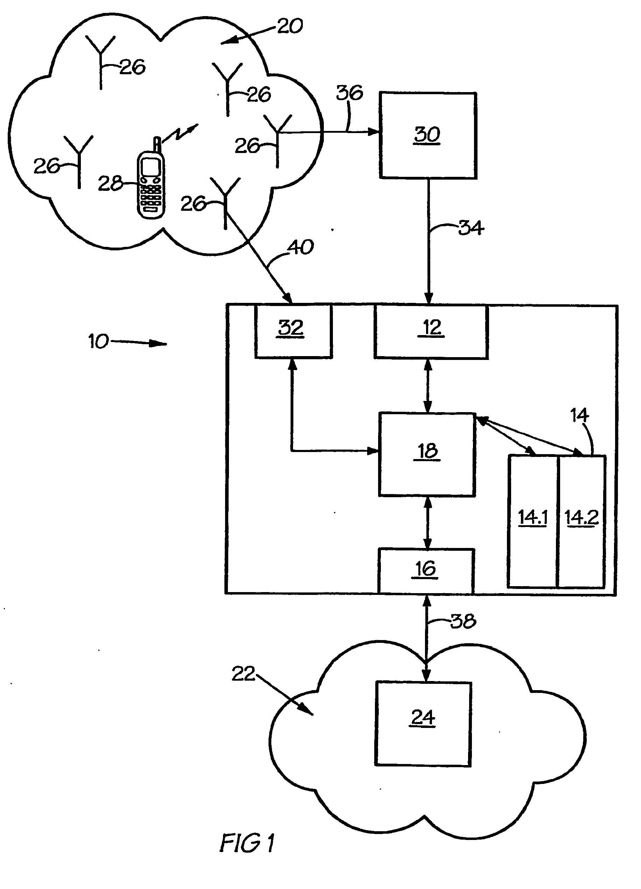

In Figure 1 reference numeral 10 generally indicates a transaction processing system in accordance with the invention. The transaction processing system 10 is connected to a telecommunications network in the form of a mobile communications network 20 and to a secure data network 22. The transaction processing system 10 includes a processor 18, in communication with a first network interface 12, a host database 14, and a second network interface 16.

The host data base 14 stores confidential information (e.g. bank account details, credit card details, debit card details, or any other details which can be used to gain access to a bank account or the like) of requesters 14.1 as well as banking information (including confidential information of a similar type to that of the requesters) of providers of goods and services 14.2 who have registered with the operator of the host database 14. The confidential information of the requesters 14.1 is indexed with uniquely identifiable requester information (for example, a code or cellular telephone number), and can be retrieved by use of the uniquely identifiable requester information. The banking information of the providers of goods and services 14.2 is indexed with an inventory of goods and services provided by the providers, and can be retrieved by providing details of the goods or services that are requested.

The first network interface 12 is connected to the mobile communication network 20 in the form of a cellular telephone network. A number of cellular telephone base stations 26 are provided in the cellular telephone network 20 to receive signals from mobile communication devices in the form of cellular telephones, of which only one is shown at 28.

The first network interface 12 is connected to the cellular telephone network 20 via a gateway 30 which is connected to one of the cellular telephone base stations 26. In this example, the connections 34, 36 are TCP/IP connections made via the Internet but may be any other type of connections depending on the nature of the system.

The second network interface 16 is connected to a host computer 24 of a financial institution (such as a bank) in a secure data network 22, via a Wide Area Network (WAN) connection 38. The secure data network 22 may be a dedicated leased line network providing access only to authorized users. Multiple host computers (of which only one is shown as 24) may form part of the secure data network 22.

In Figure 1, the transaction processing system 10 includes an optional third network interface 32 connected directly to a base station 26 in the telephone network 20 via a TCP/IP Internet connection.

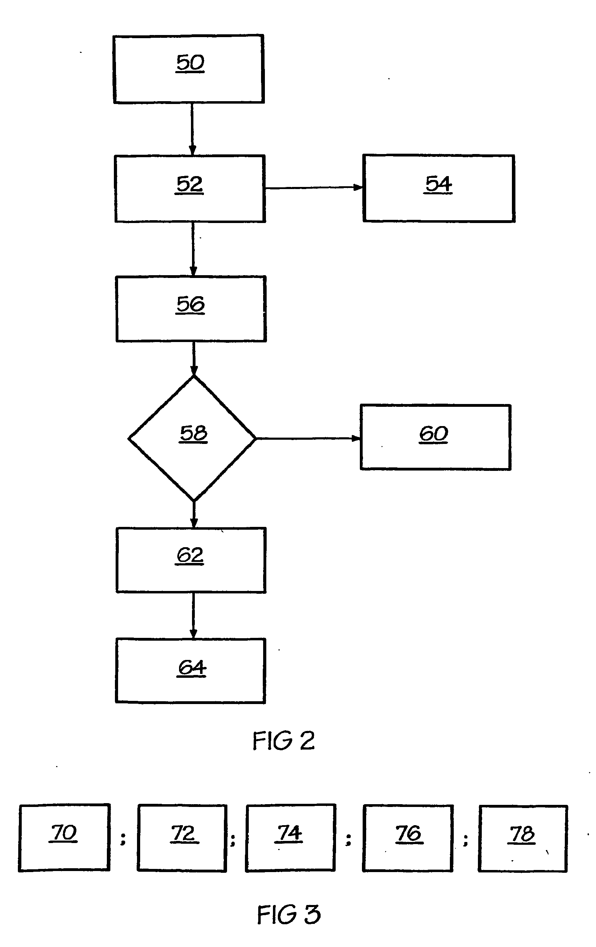

The operation of the transaction processing system and a method of processing a transaction will now be described with reference to Figures 1 and 2.

In use, a SMS telecommunications data message is keyed in by a user/requester on the cellular telephone and sent from the cellular telephone 28 to one or more of the cellular telephone base stations 26 in the cellular telephone network 20. It is to be appreciated that the data message request received by the system 10 therefore includes the information contained in the telecommunications data message and additional information identifying the requester by identifying where the telecommunications data message originates from (in this example, by identifying a telephone number associated with the cellular telephone 28). The information identifying the requester by identifying where the telecommunications data message originates from is typically added to the telecommunications data message by the cellular telephone network 20 and/or the gateway 30. Accordingly, the data message request may comprise a compound data message which contains multiple mobile originating data messages manipulated by the gateway into a format enabling the database to identify the requester in each of the mobile originating data messages.

In this example, the data message request contains transaction information uniquely identifying the requester (as contained in the telecommunications data message and as added to the telecommunications data message by the cellular telephone network 20 and/or the gateway 30 enabling the database to identify the requester) and details of the goods or services to be provided. In particular, the SMS telecommunications data message contains five data fields as shown in Figure 3. The data fields are delimited by semicolons in this example. The first data field 70 contains a requester code in the form of a unique security code only known by the requester. The second data field 72 contains a description of the transaction to be performed (such as "purchase" or "pay" etc) or the type of product. The third date field 74 contains the amount of the transaction. The fourth data field 76 identifies the type of requester account to be used for payment (such as a cheque account, a credit card account, or a debit card account). The fifth data field 78 is a code which identifies the provider in the host database 14.

The data message request, which does not contain confidential information of the requester or provider, is relayed via the gateway 30 to the transaction processing system 10. The data message request is received at reference numeral 50 in Figure 2, by the transaction processing system 10 via the first network interface 12. The processor 18 reads the transaction information and uses the uniquely identifiable requester information to retrieve the confidential information 14.1 of the requester at 52 from the database 14. This is typically done by processing the requester code contained in the first data field 70 and/or by processing the additional information identifying the requester by identifying where the telecommunications data message originates from (in this example, by identifying a telephone number associated with the cellular telephone 28). The transaction information containing the details of the requested goods or services is used to retrieve banking information 14.2 of a provider of the goods or services, also at 52, from the database 14. This is typically done by processing the information contained in the fifth data field 78. If information of either the requester or the provider is not correctly retrieved, an error message is sent to the requester at 54.

The processor 18 sends the information 14.1, 14.2 of the requester and the provider via the second network interface 16 to a financial institution 24 at 56. The financial institution 24 process the monetary transfer request and in response sends a monetary transfer confirmation via the second network interface 14 to the processor 18 at 58. If the transaction is unsuccessful, an error message is optionally sent to the requester at 60.

If the transaction is successful, the processor 18 transmits a confirmation message via the first network interface 12 to the provider at 62. On receipt of the confirmation message the provider then arranges to deliver the requested goods or services to the requester. In addition, the processor 18 can also transmit a confirmation message to the requester at 54.

Similar to the description above a data message request can also be received via the third network interface 32. The third network interface 32 is configured to receive single data message requests from requesters while the first network interface 12 which is connected via the gateway 30 to the telephone network 20 can receive multiple data message requests which can be combined into a single data message request from which each requester and the goods and services requested by each requester can be identified.

It is to be appreciated that the data message requests can originate from other mobile communication networks and be routed via the gateway 30 to the transaction processing system 10. It is further to be appreciated that the confirmation message may also be routed to the provider by means other than as mobile terminating data messages, for example, as an e-mail message on the Internet.

As will be appreciated, the host database 14 of this example facilitates the transfer of goods and services between the transacting parties and facilitates the financial transaction between the transacting parties by acting as an intermediary without being directly involved in these transfers.

In another embodiment of the invention, the processor 18 may be configured to send a confirmation message to a registered telephone of a registered requester corresponding to the requester uniquely identified by the transaction information, prior to the step of obtaining verification, in which confirmation message confirmation of the monetary transfer is requested. In this way, fraudulent data message requests can be spotted in circumstances where the data message request does not originate from the same telephone as the registered telephone to which the confirmation message is sent.

The sent confirmation message may include a code which is to be return in order to confirm that the monetary transfer is to be requested. Such code is typically randomly generated. The sent confirmation message may include details of the monetary transfer such as details of the requester, details of the recipient, details of the amount, details of the goods or services, and/or the like. Accordingly, the processor 18 may also be configured to wait for the receipt of a confirmation message confirming that the monetary transfer is to be requested.

It is to be understood that the scope of this invention is not limited to the above description and associated drawings which merely exemplify the invention as a multitude of different combinations of stated features are possible. Also, many of the stated features are optional and, accordingly, can be omitted altogether.

For example, in another embodiment of the invention, the system may be configured so as to receive a data message request which originates from any telecommunications data message sent by a requester from any telecommunications device, via any telecommunications network. Accordingly, the telecommunications device may be a mobile communications device such as a mobile telephone handset (as described in the above example), a mobile computer (e.g. a laptop computer), a personal digital assistant (PDA), or the like. The mobile communications device may be adapted to operate in a mobile communications network, a satellite transceiver, or the like. Accordingly, the telecommunications data message may include a SMS data message (as described in the above example), a wireless application protocol (WAP) data message, an e-mail data message, or the like.

Furthermore, the telecommunications device may be a non-mobile communications device such as a non-mobile computer, a non-mobile telephone handset, a PDA, or the like. Accordingly, the data message request may include an e-mail data message, a SMS data message (typically originating from a non-mobile telephone), or the like.

Yet furthermore, the provider may be any intended recipient of a monetary transfer including a mere beneficiary. Also, the data message request may not contain any transaction information capable of uniquely identifying the recipient (as contained in the fifth data field 78 in the above description) as all data message requests originating from a particular requester or pertaining to a particular transaction may automatically designate a predetermined recipient (details of which are stored on the host database 14). Similarly, the data message request may not contain the information identifying the type of requester account (as contained in the fourth data field 76 in the above description) as all data message requests originating from a particular requester, or pertaining to a particular transaction or recipient may automatically designate a predetermined requester account (details of which are stored on the host database 14). Similarly, the data message request may not contain the amount (as contained in the third data field 74 in the above description) of the transaction as all data message requests originating from a particular requester, or pertaining to a particular transaction or recipient may automatically designate a predetermined amount (details of which are stored on the host database 14). Similarly, the data message request may not contain the description of the transaction to be performed or the type of product (as contained in the second data field 72 in the above description) as all data message requests originating from a particular requester, or pertaining to a particular recipient may automatically designate a predetermined description of the transaction to be performed or the type of product (details of which are stored on the host database 14).

It is to be appreciated that the data message request may not even contain the requester code (as contained in the first data field 70 in the above description) as the requester can be uniquely identified from the additional information identifying the requester by identifying where the telecommunications data message originates from (by identifying a telephone number associated with the cellular telephone 28 in the above example, by identifying an e-mail address of a sender, or the like). As previously described, the information identifying the requester by identifying where the telecommunications data message originates from is typically added to the telecommunications data message by the telecommunications network (for example the cellular telephone network 20 as described above), by a gateway (such as the gateway 30 described above), or the like.

It is also to be appreciated that confidential information of the requester is the only information that must not be included in the data message request as such confidential information can be used fraudulently to withdraw money from the requester's banking account. However, the data message request may contain non-confidential banking details (such as an account number) of the recipient/provider as such non-confidential banking details cannot be used to withdraw money from the requester's banking account. Accordingly, the host database 14 of the above example need only contain confidential information of a plurality of requesters 14.1 and not any banking information (including confidential information of a similar type to that of the requesters) of recipients/providers of good and services 14.2. Therefore, the system of this invention can operate in a similar manner to conventional credit card systems without transmitting confidential information when processing a transaction.

It is further to be appreciated that nature, sequence, and number of fields contained in a data message request may vary depending on the type of transaction to be conducted. Furthermore, the data message request may contain further data fields such as a sixth data field identifying an account of the provider/beneficiary (which may be one of many accounts) and such as a seventh field further identifying the particular goods or services for which payment is to be made (such as an electricity meter number, or the like).

In other embodiments of the invention, the processor 18 may not send the information 14.1, 14.2 of the requester and the provider via the second network interface 16 to a financial institution 24 at 56 so as obtain verification that a monetary transfer between the requester and a recipient of the monetary transfer will be or has been carried out in relation to the transaction. Accordingly, the system 10 may be modified so as to accommodate a method which includes, prior to the step of receiving a data message request, the step of receiving money from the requester for subsequent payment to a recipient. This money will then be held by or on behalf of an operator of the system 10 until a request for appropriation of this money is received from the requester. The step of obtaining verification may then include verifying that there is sufficient money remaining of the money received from the requester to effect the monetary transfer requested. Thereafter, the actual payment of the money to a recipient may be carried out by the operator of the system 10. It is to be appreciated that the operator of the system and the recipient/provider may be the same person or entity, in some circumstances.

It is also to be appreciated that the word "requester" is used, for convenience, consistently throughout the specification and claims to indicate the person making bona fide use of the method and system of this invention. Accordingly, in fraudulent circumstances, for example, the requester requesting the transaction and the person uniquely identified as the requester are not the same.

The inventors believe that the invention, as illustrated, provides a new method of processing a transaction and a new transaction processing system which can be used to facilitate a transaction between a requester and a recipient without confidential information of the requester (and optionally of the recipient) being transmitted over a public access network system. The confidential information is entrusted to a secure host which, for example, communicates with a banking institution network to give effect to a transaction. The inventor further believes that this method and system would reduce the risk of fraudulent use of confidential information of the requester (and optionally of the recipient).

## Claims

1. A method of processing a transaction which method includes the following steps:
receiving a data message (50) request which originates from a telecommunications data message sent by a requester requesting a monetary transfer to a recipient, wherein the telecommunications data message is sent from a telecommunications device (28) of the requester via a telecommunications network (20) without being relayed through the recipient, in which said data message request contains transaction information capable of uniquely identifying, on at least one host database (14), the requester;
accessing electronically (52) the at least one host data base (14) to which confidential information of a plurality of requesters have been entrusted;
obtaining verification (58) that a monetary transfer between the requester and the recipient of the monetary transfer will be or has been carried out in relation to the transaction; and
transmitting an electronic transaction verification message (62) confirming that a monetary transfer between the requester and the recipient will be or has been carried out.

2. A method as claimed in claim 1, wherein the telecommunications network includes a non-mobile telephone network.

3. A method as claimed in claim 1, wherein the telecommunications network includes a mobile telephone network.

4. A method as claimed in claim 1, wherein the telecommunications network includes an e-mail network.

5. A method as claimed in claim 1, wherein the transaction information capable of uniquely identifying the requester is added to the telecommunications data message by the telecommunications network.

6. A method as claimed in any one of claims 1 to 5, wherein the telecommunications data message contains information uniquely identifying the requester which is matched to information on the at least one host database thereby to retrieve the confidential information of a requester.

7. A method as claimed in any one of claims 1 to 6, wherein the telecommunications data message contains information uniquely identifying the recipient which is matched to information on the at least one host database thereby to retrieve the banking information of a recipient.

8. A method as claimed in any one of claims 1 to 7, which also includes, prior to the step of receiving a data message request, the step of designating, on the at least one host database, a particular recipient for each transaction related to a particular data message request such that the telecommunications data message does not require any information specifically identifying the recipient as the recipient can be obtained from the host database.

9. A method as claimed in any one of claims 1 to 8, wherein the verification message includes a unique code that the requester may present to the recipient confirming verification of the monetary transfer.

10. A transaction processing system (10) which includes
a first network interface (12) connectable to a telecommunication network (20), the first network interface being configured to receive a data message request originating from a telecommunications data message sent by a requester requesting a monetary transfer to a recipient, wherein the telecommunications data message is sent from a telecommunication device (28) of the requester via the telecommunications network (20) without being relayed through the recipient, wherein the data message request contains transaction information uniquely identifying the requester, and the first network interface (12) is configured to transmit a data message;
a host database (14) containing confidential information of requesters wherein the confidential information of each requester is indexed with at least some of the information contained in a data message request; and
a processor (18) operable to receive the data message request via the first network interface (12), to retrieve confidential information of the requester by use of the uniquely identifiable requester information; to obtain verification that a monetary transfer between the requester and the recipient of the monetary transfer will be or has been carried out in relation to the transaction; and to transmit a confirmation of transaction message via the first network interface (12).

## Patentansprüche

1. Verfahren zum Verarbeiten einer Transaktion, wobei das Verfahren die folgenden Schritte umfasst:
Empfangen einer Datennachrichtanforderung (50), die von einer Telekommunikationsdatennachricht stammt, die von einem Anforderer gesendet wird, der einen Geldtransfer an einen Empfänger anfordert, wobei die Telekommunikationsdatennachricht von einer Telekommunikationsvorrichtung (28) des Anforderers über ein Telekommunikationsnetz (20) gesendet wird, ohne durch den Empfänger weitergeleitet zu werden, in dem die Datennachrichtanforderung eine Transaktionsinformation enthält, die in der Lage ist, auf wenigstens einer Host-Datenbasis (14) den Anforderer eindeutig zu identifizieren;
elektronisches Zugreifen (52) auf die wenigstens eine Host-Datenbasis (14), der vertrauliche Information mehrerer Anforderer anvertraut wurde;
Erhalten einer Verifikation (58), dass ein Geldtransfer zwischen dem Anforderer und dem Empfänger des Geldtransfers bezüglich der Transaktion ausgeführt werden wird oder ausgeführt wurde; und
Übermitteln einer elektronischen Transaktionsverifikationsnachricht (62), die bestätigt, dass ein Geldtransfer zwischen dem Anforderer und dem Empfänger ausgeführt werden wird oder ausgeführt wurde.

2. Verfahren gemäß Anspruch 1, wobei das Telekommunikationsnetz ein nichtmobiles Telefonnetz umfasst.

3. Verfahren gemäß Anspruch 1, wobei das Telekommunikationsnetz ein mobiles Telefonnetz umfasst.

4. Verfahren gemäß Anspruch 1, wobei das Telekommunikationsnetz ein E-Mail-Netz umfasst.

5. Verfahren gemäß Anspruch 1, wobei die Transaktionsinformation, die in der Lage ist, den Anforderer eindeutig zu identifizieren, der Telekommunikationsdatennachricht von dem Telekommunikationsnetz hinzugefügt wird.

6. Verfahren gemäß einem der Ansprüche 1 bis 5, wobei die Telekommunikationsdatennachricht eine den Anforderer eindeutig identifizierende Information enthält, die mit Information auf der wenigstens einen Host-Datenbasis verglichen wird, um **dadurch** die vertrauliche Information eines Anforderers abzurufen.

7. Verfahren gemäß einem der Ansprüche 1 bis 6, wobei die Telekommunikationsdatennachricht eine den Empfänger eindeutig identifizierende Information enthält, die mit Information auf der wenigstens einen Host-Datenbasis verglichen wird, um **dadurch** die Bankinformation eines Empfängers abzurufen.

8. Verfahren gemäß einem der Ansprüche 1 bis 7, welches auch umfasst, vor dem Schritt des Empfangens einer Datennachrichtanforderung, den Schritt des Bestimmens, auf der wenigstens einen Host-Datenbasis, eines speziellen Empfängers für jede Transaktion, die auf eine spezielle Datennachrichtanforderung bezogen ist, so dass die Telekommunikationsdatennachricht keine speziell den Empfänger identifizierende Information benötigt, da der Empfänger von der Host-Datenbasis erhalten werden kann.

9. Verfahren gemäß einem der Ansprüche 1 bis 8, wobei die Verifikationsnachricht einen eindeutigen Code umfasst, den der Anforderer dem Empfänger vorlegen kann, der eine Verifikation des Geldtransfers bestätigt.

10. Transaktionsverarbeitungssystem (10), welches umfasst
eine erste Netzschnittstelle (12), die mit einem Telekommunikationsnetz (20) verbindbar ist, wobei die erste Netzschnittstelle konfiguriert ist, um eine von einer Telekommunikationsdatennachricht stammende Datennachrichtanforderung zu empfangen, die von einem Anforderer gesendet wird, der einen Geldtransfer an einen Empfänger anfordert, wobei die Telekommunikationsdatennachricht von einer Telekommunikationsvorrichtung (28) des Anforderers über das Telekommunikationsnetz (20) gesendet wird, ohne durch den Empfänger weitergeleitet zu werden, wobei die Datennachrichtanforderung eine den Anforderer eindeutig identifizierende Transaktionsinformation enthält, und die erste Netzschnittstelle (12) konfiguriert ist, um eine Datennachricht zu übermitteln;
eine Host-Datenbasis (14), die vertrauliche Information von Anforderern enthält, wobei die vertrauliche Information jedes Anforderers mit wenigstens einem Teil der in einer Datennachrichtanforderung enthaltenen Information indiziert ist; und
einen Prozessor (18), der ausgelegt ist, die Datennachrichtanforderung über die erste Netzschnittstelle (12) zu empfangen; vertrauliche Information des Anforderers durch Verwendung der eindeutig identifizierbaren Anfordererinformation abzurufen; eine Verifikation zu erhalten, dass ein Geldtransfer zwischen dem Anforderer und dem Empfänger des Geldtransfers in Bezug auf die Transaktion ausgeführt werden wird oder ausgeführt wurde; und eine Transaktionsbestätigungsnachricht über die erste Netzschnittstelle (12) zu übermitteln.

## Revendications

1. Méthode de traitement d'une transaction, laquelle méthode inclut les étapes suivantes :
◆ recevoir une demande de message de données (50) qui émane d'un message de données de télécommunication envoyé par un demandeur demandant un transfert monétaire à un destinataire, dans laquelle le message de données de télécommunication est envoyé à partir d'un dispositif de télécommunication (28) du demandeur via un réseau de télécommunication (20) sans être relayé au destinataire, où ladite demande de message de données contient des informations de transaction capables d'identifier uniquement, sur au moins une base de données hôte (14), le demandeur ;
◆ avoir accès électroniquement (52) à la au moins une base de données hôte (14) à laquelle des informations confidentielles d'une pluralité de demandeurs ont été confiées ;
◆ obtenir une vérification (58) qu'un transfert monétaire entre le demandeur et le destinataire du transfert monétaire sera, ou a été, effectué par rapport à la transaction ; et
◆ transmettre un message de vérification de transaction électronique (52) confirmant qu'un transfert monétaire entre le demandeur et le destinataire sera, ou a été, effectué.

2. Méthode selon la revendication 1, dans laquelle le réseau de télécommunication inclut un réseau de téléphone non mobile.

3. Méthode selon la revendication 1, dans laquelle le réseau de télécommunication inclut un réseau de téléphone mobile.

4. Méthode selon la revendication 1, dans laquelle le réseau de télécommunication inclut un réseau de courrier électronique.

5. Méthode selon la revendication 1, dans laquelle les informations de transaction capables d'identifier uniquement le demandeur sont ajoutées au message de données de télécommunication par le réseau de télécommunication.

6. Méthode selon l'une quelconque des revendications 1 à 5, dans laquelle le message de données de télécommunication contient des informations identifiant uniquement le demandeur qui sont adaptées aux informations sur la au moins une base de données hôte pour récupérer, de ce fait, les informations confidentielles d'un demandeur.

7. Méthode selon l'une quelconque des revendications 1 à 6, dans laquelle le message de données de télécommunication contient des informations identifiant uniquement le destinataire qui sont adaptées aux informations sur la au moins une base de données hôte pour récupérer, de ce fait, les informations bancaires d'un destinataire.

8. Méthode selon l'une quelconque des revendications 1 à 7, qui inclut également, avant l'étape de réception d'une demande de message de données, l'étape de désignation, sur la au moins une base de données hôte, d'un destinataire particulier pour chaque transaction liée à une demande de message de données particulière de telle sorte que le message de données de télécommunication ne nécessite pas d'informations identifiant de façon spécifique le destinataire puisque le destinataire peut être obtenu à partir de la base de données hôte.

9. Méthode selon l'une quelconque des revendications 1 à 8, dans laquelle le message de vérification inclut un code unique que le demandeur peut présenter au destinataire confirmant la vérification du transfert monétaire.

10. Système de traitement de transaction (10) qui inclut :
+ une première interface réseau (12) qui peut être raccordée à un réseau de télécommunication (20), la première interface réseau étant configurée pour recevoir une demande de message de données émanant d'un message de données de télécommunication envoyé par un demandeur demandant un transfert monétaire à un destinataire, dans lequel le message de données de télécommunication est envoyé à partir d'un dispositif de télécommunication (28) du demandeur via le réseau de télécommunication (20) sans être relayé au destinataire, dans lequel la demande de message de données contient des informations de transaction identifiant uniquement le demandeur, et la première interface réseau (12) est configurée pour transmettre un message de données ;
◆ une base de données hôte (14) contenant les informations des demandeurs dans laquelle les informations confidentielles de chaque demandeur sont indexées avec au moins quelques-unes des informations contenues dans une demande de message de données ; et
◆ un processeur (18) qui peut être utilisé pour recevoir la demande de message de données via la première interface réseau (12) ; pour récupérer les informations confidentielles du demandeur par l'utilisation des informations uniquement identifiables sur le demandeur ; pour obtenir une vérification qu'un transfert monétaire entre le demandeur et le destinataire du transfert monétaire sera, ou a été, effectué par rapport à la transaction ; et pour transmettre une confirmation du message de transaction via la première interface réseau (12).
